# EUROPEAN PATENT APPLICATION

(11) **EP 3 241 738 A1**
(43) Date of publication of application: **08.11.2017**
(21) Application number: 16168574.8
(22) Date of filing: 06.05.2016
(51) Int. Cl.: B64B 1/62

(54) **AN AIRSHIP**

(71) Applicant: Wu, Wanlu, 3017 Vitolini Valgundes pagasts, Jelgavas novads (LV)
(72) Inventor: Wu, Wanlu, 3017 Vitolini Valgundes pagasts, Jelgavas novads (LV)
(74) Representative: Kuzjukevica, Lucija

(57) **Abstract**

Invention relates to an airship and its control system and method to control increase or decrease of altitude of the airship.

An airship (1) comprises a hull (2) of constant volume and made of hardened composite polymer material, so as to ensure a constant volume of the hull (2). The hull (2) is filed with a buoyant gas (3) and air (4). The airship (1) further comprises a multistage-turbine air compressor (8) for adjustment of proportion of the air (4) and the buoyant gas (3) within the hull (2), so as to control the airship (1) buoyancy; a receiver (5) for storing the compressed buoyant gas (3); and an opening (7) providing a fluid communication between an inside of the hull (2) and an atmosphere equalizing a pressure between the hull (2) and atmosphere.

## Description

Invention relates to an airship and its control system and method to control increase or decrease of altitude of the airship.

US3856236 discloses a composite aircraft with balanced set of wings extend horizontally from a large lifting balloon chamber containing a lighter-than-air gas, such as helium. The gas is stored within eight preformed balloonettes disposed within corresponding segments of the spherical balloonette-containing chamber of sheet material distended into substantially spherical form by a slight positive air pressure. The wings are mounted on horizontal spars connected to the centre of a vertical mast installed within the balloon chamber. The spars are secured against upward and downward forces by guy wires, from the mast, between which the balloonettes are disposed. Rotatable couplings connect the wings to the spars to permit adjustment of their angle of attack. Turboprop engines are mounted on the wings to rotate the wings and attached chamber about its vertical axis at a relatively slow rotational, appreciable tangential speed.

US 4365772 discloses an aircraft with a spherical balloon filled with buoyant gas such as helium at a pressure substantially greater than atmospheric so that its dimensions are substantially unaffected by changes in atmospheric pressure or temperature. The spherical balloon is mounted on a normally horizontal axle having end portions projecting from opposite sides of the balloon, and includes a rigid load supporting yoke including two arms extending upwardly from a central load supporting structure and each with an upper end suspended from the axle.

US7055777 discloses n airship with a generally spherical shape and has an internal envelope for containing a lifting gas such as Helium or Hydrogen. The airship has a propulsion and control system that permits it to be flown to a desired loitering location, and to be maintained in that location for a period of time.

US 6805319 discloses a dirigible balloon with an internal enclosure having a flexible wall contained in an outer rigid enclosure, which is of aerodynamic shape. The internal enclosure contains helium and is provided with means enabling its volume to be modified. Thus, depending on the volume given to the internal enclosure of the dirigible balloon, landing, take-off, and altitude variation are easy to perform. The means for modifying the volume of the internal enclosure comprise a cable connected to the internal enclosure by means of a set of pulleys and a winch for reducing the length of the cable. The given system contains beam, pulleys and cable system, which makes the following system complicated and hard to operate.

The present invention is an airship comprising a hull of constant volume and made of hardened composite polymer material. This ensures that the hull is always with the constant volume. The hull is filed with a buoyant gas and air. The buoyant gas can be any gas, which is lighter than air.

The airship further comprises an air compressor, especially a multistage-turbine air compressor, for adjustment of proportion of the air and the buoyant gas within the hull, so as to control the airship buoyancy.

Multistage compressor can compress the buoyant gas with high efficiency to high pressure, and the heat from compression is stored within the receiver or tank. Because the hull is made as a hard shell and therefore has constant volume, the air enters into the hull naturally or automatically. There is no extra pressure on the shell, and the buoyancy of the airship can be manipulated or controlled without difficulty.

The airship further comprises a receiver for storing the buoyant gas in a compressed state and a heat radiator or heat exchanger for heat exchange between the buoyant gas and the air. The receiver is connected to the heat exchanger, but the heat exchanger is connected to the multistage-turbine air compressor. A heat exchanger provides heat exchange between inlet and outlet air from the opening and the buoyant gas.

The receiver or tank connected to the heat exchanger and the compressor connected to the heat exchanger form a buoyant gas control system. The receiver comprises the buoyant gas.

The airship comprises an opening at a lower part of the hull, which provides fluid communication between an inside of the hull and an atmosphere equalizing a pressure within the hull and atmosphere or outer air. The opening is configured as a bi-directional opening. The opening is directly connected to the heat exchanger providing effective heat exchange between the air and heat collected within the heat exchanger.

Because of the direct link between the hull interior and the outside or atmosphere, there is a balance of pressure at any height. In this way, the airship can easily rise up even into a stratosphere and remain there without any problem for a long time. The load for the airship is reduced due to decrease in air density.

The hull of the airship further comprises a flexible wall, which separates the buoyant gas from the air within the hull.

The hull further comprises dividing walls, which further divide the hull in separate chambers.

The airship further comprises buoyant gas pipes connected to the compressor and extending into the upper part of the hull. The buoyant gas pipes extend in each chamber separately.

The airship with the following scheme is able to control buoyant gas successfully. Therefore, the airship will not enter into a positive cycle, which is also known as a vicious cycle. The present invention provides a balance between the inside of the airship or the hull and outside or atmosphere, or stratosphere. The airship acquires the air pressure equilibrium, therefore it is much more safer. Furthermore, the airship is not influenced by surrounding temperature, so that the airship operation is safer and more economical.

The present invention will now be described with reference to the accompanying drawings in which:

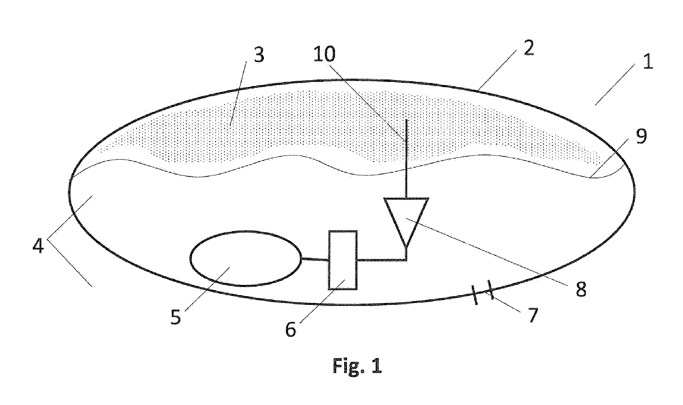

Fig. 1 illustrates schematically an airship **1.**
Fig. 2 illustrates another embodiment of an airship **1** with multiple chambers **12** divided by dividing walls **11.**

An airship **1** comprises a hull **2** of constant volume and made of hardened composite polymer material, so as to ensure a constant volume of the hull **2.** The hull **2** is filed with a buoyant gas **3** and air **4.** The buoyant gas **3** is filed in the upper part of the hull **2.** The airship 1 comprises a multistage-turbine air compressor **8** for adjustment of proportion of the air 4 and the buoyant gas **3** within the hull **2,** so as to control the airship **1** buoyancy. The multistage-turbine air compressor **8** is connected to a receiver **5** for storing the compressed buoyant gas **3** via a heat exchanger **6.** The heat exchanger **6** provides a heat exchange between inlet and outlet air from the opening **7** and the buoyant gas **3.** The airship **1** further comprises an opening **7** at a lower part of the hull **2,** which provides fluid communication between an inside of the hull **2** and an atmosphere equalizing a pressure within the hull **2** and atmosphere. The air **4** flows through the opening **7** and the heat exchanger **6,** in result of which the air **4** takes a heat from the heat exchanger **6.** The hull **2** further comprises a flexible wall **9,** which separates the buoyant gas **3** from the air **4** within the hull **2.** The outlet pipe **10** of the buoyant gas **3,** which is connected to the compressor **8,** penetrates the flexible wall **9** and extends up to the upper part of the hull **2.**

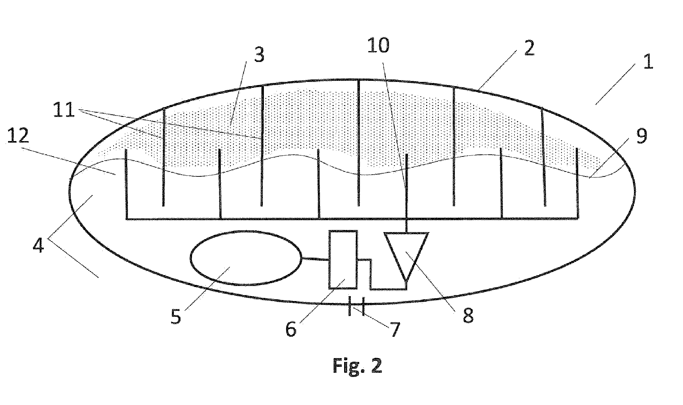

Another embodiment of the airship **1** comprises all the features of the above described embodiment and further comprises multiple chambers **12,** which are divided by dividing walls **11** (see Fig. 2). The following embodiment increases the safety of the airship **1.** If the defect occurs in one of the chambers **12,** the rest of the airship **1** is unaffected.

The present invention has been shown and described herein in what is considered to be the most practical and preferred embodiment. It is recognized, however, that departures may be made therefrom within the scope of the invention and that obvious modifications will occur to a person skilled in the art.

## Claims

1. An airship (1) comprising:
- a hull (2) of constant volume and made of hardened composite polymer material, so as to ensure a constant volume of the hull (2), wherein the hull (2) is filed with a buoyant gas (3) and air (4), wherein the buoyant gas (3) is filed in the upper part of the hull (2);
- a multistage-turbine air compressor (8) for adjustment of proportion of the air (4) and the buoyant gas (3) within the hull (2), so as to control the airship (1) buoyancy;
- a receiver (5) for storing the compressed buoyant gas (3); and
- an opening (7) at a lower part of the hull (2), which provides fluid communication between an inside of the hull (2) and an atmosphere equalizing a pressure between the hull (2) and atmosphere.
- a heat exchanger (6) for heat exchange between inlet and outlet air from the opening (7) and the buoyant gas (3).

2. The airship according to the Claim 1, **characterized in that** the hull (2) further comprises a flexible wall (9) which separates the buoyant gas (3) from the air (4) within the hull (2).

3. The airship according to Claim 1 or 2, **characterized in that** the hull (2) further comprises dividing walls (11) which further divide the hull (2) in separate chambers (12).

4. The airship according to any of the Claims, **characterized in that** it further comprises buoyant gas pipes (10) connected to the compressor (8) and extending into the upper part of the hull (2).

5. The airship according to Claim 4, **characterized in that** the buoyant gas pipes (10) extend in each chamber (12) separately.
